# EUROPEAN PATENT SPECIFICATION

(11) **EP 1 511 781 B1**
(45) Date of publication and mention of the grant of the patent: **18.01.2006**
(21) Application number: 03728998.0
(22) Date of filing: 15.05.2003
(51) Int. Cl.: C08F 257/02, C08F 265/04, C08F 291/00, B41M 5/00

(54) **CATIONIC CORE-SHELL PARTICLES WITH ACID-SWELLABLE SHELLS**
KATIONISCHE KERN/SCHALE-TEILCHEN MIT SÄURE-QUELLBAREN SCHALEN
PARTICULES COEUR-ECORCE CATIONIQUES A ECORCE GONFLABLE DANS L'ACIDE

(30) Priority: 12.06.2002 US 171329; 12.07.2002 US 194352
(43) Date of publication of application: 09.03.2005
(73) Proprietor: MEADWESTVACO CORPORATION, Law Department, Smyrna, GA 30080 (US)
(72) Inventor: HUTTER, Frederick, G., Charleston, SC 29407 (US); STEBBINS, Camille, K, Charleston, SC 29407 (US); SAMARANAYAKE, Gamini, s., Mount Pleasant, SC 29464 (US)
(74) Representative: Hepworth, John Malcolm
(86) International application number: PCT/US2003/015636
(87) International publication number: WO 2003/106520

(56) References cited:
- EP-A- 0 478 193
- EP-A- 0 701 902
- EP-A- 0 796 901
- EP-A- 1 288 012
- EP-A- 1 319 519
- US-A- 5 439 739
- US-A- 5 478 631
- US-B1- 6 348 256
- US-B1- 6 521 343

## Description

### FIELD OF INVENTION

This invention concerns cationic core-shell particles having an acid-insoluble polymeric core and an acid-swellable polymeric shell component disposed generally about said core so that upon neutralizing said shell with acid, a portion of said shell remains attached or associated with said core. This invention further concerns polymer latex compositions wherein said polymeric shell component has been neutralized and substantially, but not totally, dissolved so as to form a blend of neutralized core-shell polymer and an aqueous solution of neutralized shell polymer. More particularly, the invention concerns the use of latex compositions produced from these cationic core-shell particles to formulate ink jet receptive coatings.

### BACKGROUND OF THE INVENTION

Ink jet printing is widely used to print on a variety of substrates (including paper, textiles, and plastic films). These substrates are often coated with a material that enhances their receptivity for the ink jet ink. In the case of aqueous dye-based inks, which comprise the majority of inks currently used in ink jet printing, two properties are of paramount importance. The first is an affinity for water, as the coating must absorb a large amount of water from the ink in order to obtain a print that is dry to the touch in few seconds. Ink jet ink formulations often contain over 90% water. Furthermore, the coating must maintain its physical integrity while absorbing all of this water. In other words, the receptive coating must be hydrophilic enough to absorb a large quantity of water without actually being water-soluble.

The second important property is dye fixation. The majority of aqueous ink jet inks are based on dyes rather than pigments. To obtain sharp prints with high color density, the dye molecules must be immobilized almost immediately upon contact of the ink with the substrate. Penetration of the dyes into the substrate will result in reduced color density, while lateral migration of the dye molecules will cause indistinctness in the image formed.

In order to obtain high water absorption, ink jet receptive coatings have traditionally been formulated with both hydrophilic pigments (such as silica or alumina) and hydrophilic binders. While the most commonly used hydrophilic binders are polyvinyl alcohol (PVOH) and polyvinylpyrrolidinone (PVP), other suitable natural and synthetic polymers are known in the art (e.g., gelatin, starch, polyethylene oxide (PEO), hydroxyethylcellulose, carboxymethylcellulose, and the like). Those polymers that contain hydroxyl groups (such as starch, PVOH, and PEO) are often cross-linked with a compound such as glyoxal or glutaraldehyde to render them water-insoluble while maintaining their hydrophilicity. Fully hydrolyzed polyvinyl alcohol is particularly useful because it can be dissolved in hot water and remains in solution when cooled to room temperature. When the PVOH is coated on a substrate and then dried, it will not readily redissolve in room-temperature water. However, a problem exists with use of PVOH in that PVOH has no dye trapping properties.

The dyes that are commonly employed in aqueous ink jet inks are anionic, containing sulfonic acid groups. Thus dye fixation is usually accomplished by the employment of cationic polymers, although some highly polar nonionic polymers (such as PVP and polyethyloxazoline) have a limited amount of dye fixing capability. These latter polymers fix dyes by dipolar interactions between their amide groups and the sulfonic acid groups of the dye molecules, while the cationic polymers work by the more efficient mechanism of salt formation.

The most widely used cationic dye fixative in ink jet receptive coatings is poly(diallyldimethylaxnmonium chloride), although other water-soluble cationic polymers are known in the art. For example, U.S. Patent No. 6,010,790 teaches the use of poly(vinylbenzylquaternary ammonium salts). Other examples of water-soluble cationic polymers are cationic starch, cationic polyvinyl alcohol, guanidine-formaldehyde resins, epichlorohydrin-polyamine condensates, and water-soluble cationic acrylic resins.

However, a problem exists with the use of both soluble dipolar polymers and soluble cationic polymers in that, unless these polymers are cross-linked in some way, their presence has a detrimental effect on the water resistance of the ink jet prints.

As an alternative to water-soluble cationic resins, cationic acrylic or styrenic latices can be used as fixatives for anionic dyes in ink jet receptive coatings. These latices behave like plastic pigments. Attaching the positive charges to the surface of a pigment particle rather than to a soluble resin greatly enhances the water resistance of the ink jet prints. However, using substantial amounts of these cationic plastic pigments in a coating also results in rheological problems, which make the coatings difficult to employ on coating machinery. Furthermore, the level of cationic charge achievable with the cationic plastic pigment may not be high enough to achieve the desired level of dye fixing.

Anionic acrylic colloidal dispersion polymeric resins are widely used in the ink and coatings industries. Such polymers are manufactured by first making an acrylic latex that contains a substantial amount of an acidic monomer (such as methacrylic acid). Usually the amount of acidic monomer is sufficient to give the polymer an acid number of about 60 to about 120. The acidic functionality of the polymer is subsequently neutralized via the employment of a base (such as sodium hydroxide, potassium hydroxide, ammonia, or a water-soluble amine). This greatly enhances the hydrophilicity of the polymer, and the latex particles first swell and then lose their discreteness. While the resulting anionic acrylic colloidal dispersion polymeric resin product appears to be clear and homogeneous on a macroscopic basis, it is actually inhomogeneous on a molecular level, having some domains that are rich in hydrophobic moieties and other domains that are rich in hydrophilic ones. If a fugitive base is employed in the neutralization, these polymer dispersions dry to form water-insoluble films.

The production of anionic polymer latexes having alkali-insoluble cores and colloidal dispersion type shells are taught in U.S. Patent No. 4,916,171. However, these anionic polymers are unsuitable for use in ink jet coating formulations as cationicity is required for proper dye fixation.

Ink jet images are commonly formed by spraying ink formulations, the majority of which are aqueous dye-based ink solutions, onto ink jet receptive coatings. The dyes are molecularly adsorbed on the surface of the coating, where they are subsequently exposed to ambient atmospheric pollutants and light. Over time, photochemical reactions and chemical reactions with oxygen, ozone, nitrogen oxides, and/or sulfur oxides commonly cause the dyes to fade.

A traditional method of attempting to improve the fade resistance of ink jet prints has been to add stabilizers to ink jet ink formulations. For example, U.S. Patent No. 5,124,723 describes ink formulations, which contain hydroxyphenylbenzotriazole light absorbers produced as water-soluble sulfonate salts. The use of ink formulations containing water-soluble porphines as light absorbers is described in U.S. Patent No. 5,891,229.

Another approach in the attempt to improve ink jet fade resistance has been to add stabilizers to ink jet coating formulations. U.S. Patent No. 4,926,190 describes the addition of substituted hydroxyphenylbenzotriazole derivatives to a coating mixture. The use of water-soluble ultraviolet absorbers in a coating formulation is described in U.S. Patent No. 5,096,781.

The use of water-soluble light stabilizers in ink jet receptive coatings has proven to be somewhat inefficient in that the stabilizers tend to migrate into the fibers of coated fiber-containing substrates. This same migration problem is faced by ink formulations that contain stabilizers as formulation additives; and once the ink is separated from its aqueous polymeric vehicle, the dye is open to interaction with ambient conditions. However, if the stabilizers were not water-soluble, their oleophilic nature would not allow appreciable concentrations of the stabilizers in aqueous based coating systems when employed as formulation additives.

Another problem often experienced with the use of light stabilizers as formulation additives is the tendency of the stabilizers to be extruded out of the substrate (a condition known as "blooming"). Such blooming can cause a lost in effectiveness as well as dust formation problems.

Therefore, an object of the present invention is to avoid the major rheological problems associated with traditional binders employed in ink jet coatings by disclosing cationic core-shell polymer latexes having an acid-insoluble polymeric core and an acid-swellable polymeric shell component which, optionally, contains a stabilizer that is covalently bonded to the polymeric shell component.

Another object of this invention is to disclose cationic core-shell particles.

A further object of this invention is to disclose core-shell particle latexes suitable for use in formulating ink jet receptive coatings.

### SUMMARY OF THE INVENTION

The objects of this invention are met via the production of cationic core-shell particles having an acid-insoluble polymeric core component and an acid-swellable polymeric shell component wherein the shell optionally contains a stabilizer that is covalently bonded to the polymeric shell component. The polymeric shell component is disposed generally about the polymeric core component in such a manner so that, upon neutralizing the said shell with acid, the shell polymer remains attached or associated with the particle core and becomes a colloidal dispersion. As used herein the term "stabilizer" means a compound which contains in its molecular chain sites possessing ultraviolet absorbing activity, free radical scavenging activity, antioxidant activity, and/or peroxide decomposing activity.

Due to the core-shell morphology of the particle, only the shell component contains stabilizer (which is covalently bound to the shell polymer). This is an improvement over prior technologies in that the present invention permits placement of the stabilizer where the dye is actually adsorbed into the ink jet receptive coating. Moreover, the core-shell morphology allows one to use smaller quantities of the stabilizer while effecting a greater surface concentration.

The covalent bonding of the stabilizer to the shell component avoids the migration problems often associated with the use of water-soluble light stabilizers as formulation additives to inks or ink jet receptive coatings. Additionally, the binding of the stabilizer into the polymer backbone of the shell component prevents blooming.

Ink jet receptive coatings formulated with latex compositions produced from these cationic core-shell particles produce prints having enhanced definition and superior color density. These coatings also exhibit excellent rheological properties, which make them suitable for use with high-speed paper coating equipment.

### DESCRIPTION OF THE PREFERRED EMBODIMENT

The cationic core-shell particles suitable for use in formulating ink jet receptive coatings comprise:
(A) a polymeric core component, said core component comprising the free radical polymerization reaction product of a mixture comprising:
   (1) about 80.0% to about 99.5% by total weight of the monomer mixture of a member selected from the group consisting of acrylic esters of alcohols containing from 1 to 22 carbon atoms, methacrylic esters of alcohols containing from 1 to 22 carbon atoms, styrene, substituted styrenes, acrylonitrile, methacrylonitrile, vinyl chloride, vinylidene chloride, vinyl ethers, vinyl esters, N-vinyl amides, acrylamides, methacrylamides, and combinations thereof; and
   (2) about 0.5% to about 20.0% by total weight of the monomer mixture of a member selected from the group consisting of ethylenically unsaturated monomers containing at least one quaternary ammonium group and combinations thereof;
   (3) about 0.5% to about 8.0% by total weight of the mixture of a surfactant selected from the group consisting of nonionic surfactants, cationic surfactants, and combinations thereof; and
   (4) a catalytic amount of polymerization initiator, and
(B) an acid-swellable polymeric shell component disposed generally about said core component, said shell component comprising the free radical polymerization reaction product of a mixture comprising:
   (1) about 5.0% to about 35.0% by total weight of the mixture of a member selected from the group consisting of amine-containing ethylenically unsaturated monomers and combinations thereof;
   (2) about 10.0% to about 80.0% by total weight of the mixture of a member selected from the group consisting of acrylic esters of alcohols containing from 1 to 22 carbon atoms, methacrylic esters of alcohols containing from 1 to 22 carbon atoms, styrene, substituted styrenes, acrylonitrile, methacrylonitrile, vinyl chloride, vinylidene chloride, vinyl ethers, vinyl esters, N-vinyl amides, acrylamide, N-alkyl-substituted acrylamides, methacrylamide, N-alkyl-substituted methacrylamides, and combinations thereof;
   (3) up to about 15.0% by total weight of the mixture of a member selected from the group consisting of ethylenically unsaturated monomers containing at least one quaternary ammonium group and combinations thereof;
   (4) up to about 8.0% by total weight of the mixture of a member selected from the group consisting of ethylenically unsaturated monomers containing at least one hydroxyl group and combinations thereof;
   (5) up to about 8.0% by total weight of the mixture of a member selected from the group consisting of N-hydroxymethylacrylamide, N-hydroxymethylmethacrylamide, N-alkoxymethylacrylamide, N-alkoxymethylmethacrylamide, and combinations thereof;
   (6) up to about 4.0% by total weight of the mixture of a chain transfer agent;
   (7) about 0.5% to about 8.0% by total weight of the mixture of a surfactant about selected from the group consisting of nonionic surfactants, cationic surfactants, and combinations thereof; and
   (8) a catalytic amount of polymerization initiator.

The shell component may comprise the free radical polymerization reaction product of a mixture further comprising about 0.5% to about 30.0% by total weight of the mixture of stabilizer selected from the group consisting of ultraviolet absorbers which contain at least one ethylenically unsaturated group, radical scavengers which contain at least one ethylenically unsaturated group, antioxidants which contain at least one ethylenically unsaturated group, peroxide decomposers which contain at least one ethylenically unsaturated group, and combinations thereof; and wherein said stabilizer is covalently bound to said shell component. Preferred cationic core-shell particles comprise:
(A) a polymeric core component, said core component comprising the free radical polymerization reaction product of a mixture comprising:
   (1) about 85.0% to about 98.0% by total weight of the monomer mixture of a member selected from the group consisting of acrylic esters of alcohols containing from 1 to 22 carbon atoms, methacrylic esters of alcohols containing from 1 to 22 carbon atoms, styrene, substituted styrenes, acrylonitrile, methacrylonitrile, vinyl chloride, vinylidene chloride, vinyl ethers, vinyl esters, N-vinyl amides, acrylamides, methacrylamides, and combinations thereof; and
   (2) about 2.0% to about 15.0% by total weight of the monomer mixture of a member selected from the group consisting of ethylenically unsaturated monomers containing at least one quaternary ammonium group and combinations thereof;
   (3) about 1.0% to about 6.0% by total weight of the mixture of a surfactant about selected from the group consisting of nonionic surfactants, cationic surfactants, and combinations thereof; and
   (4) a catalytic amount of polymerization initiator, and
(B) an acid-swellable polymeric shell component disposed generally about said core component, said shell component comprising the free radical polymerization reaction product of a mixture comprising:
   (1) about 10.0% to about 30.0% by total weight of the mixture of a member selected from the group consisting of amine-containing ethylenically unsaturated monomers and combinations thereof;
   (2) about 15.0% to about 80.0% by total weight of the mixture of a member selected from the group consisting of acrylic esters of alcohols containing from 1 to 22 carbon atoms, methacrylic esters of alcohols containing from 1 to 22 carbon atoms, styrene, substituted styrenes, acrylonitrile, methacrylonitrile, vinyl chloride, vinylidene chloride, vinyl ethers, vinyl esters, N-vinyl amides, acrylamide, N-alkyl-substituted acrylamides, methacrylamide, N-alkyl-substituted methacrylamides, and combinations thereof;
   (3) up to about 10.0% by total weight of the mixture of a member selected from the group consisting of ethylenically unsaturated monomers containing at least one quaternary ammonium group and combinations thereof;
   (4) up to about 5.0% by total weight of the mixture of a member selected from the group consisting of ethylenically unsaturated monomers containing at least one hydroxyl group and combinations thereof;
   (5) up to about 5.0% by total weight of the mixture of a member selected from the group consisting of N-hydroxymethylacrylamide, N-hydroxymethylmethacrylamide, N-alkoxymethylacrylamide, N-alkoxymethylmethacrylamide, and combinations thereof;
   (6) up to about 3.0% by total weight of the mixture of a chain transfer agent;
   (7) about 1.0% to about 6.0% by total weight of the mixture of a surfactant about selected from the group consisting of nonionic surfactants, cationic surfactants, and combinations thereof; and
   (8) a catalytic amount of polymerization initiator.

In the preferred cationic core-shell particles, the shell component may comprise the free radical polymerization reaction product of a mixture further comprising about 5.0% to about 20.0% by total weight of the mixture of stabilizer selected from the group consisting of ultraviolet absorbers which contain at least one ethylenically unsaturated group, radical scavengers which contain at least one ethylenically unsaturated group, antioxidants which contain at least one ethylenically unsaturated group, peroxide decomposers which contain at least one ethylenically unsaturated group, and combinations thereof;

The polymeric core component comprises from about 60% to about 95% of the total weight of the core-shell particle. It is preferred that the core component constitute from about 70% to about 90% of the total weight of the particle.

The polymeric core component comprises the free radical polymerization reaction product of a mixture comprising:
(1) about 80.0% to about 99.5% (preferably from about 85.0% to about 98.0%) by total weight of the monomer mixture of a member selected from the group consisting of acrylic esters of alcohols containing from 1 to 22 carbon atoms, methacrylic esters of alcohols containing from 1 to 22 carbon atoms, styrene, substituted styrenes, acrylonitrile, methacrylonitrile, vinyl chloride, vinylidene chloride, vinyl ethers, vinyl esters, N-vinyl amides, acrylamides, methacrylamides, and combinations thereof.
(2) about 0.5% to about 20.0% (preferably from about 2.0% to about 15.0%) by total weight of the monomer mixture of a member selected from the group consisting of ethylenically unsaturated monomers containing at least one quaternary ammonium group and combinations thereof;
(3) about 0.5% to about 8.0% by total weight of the mixture of a surfactant selected from the group consisting of nonionic surfactants, cationic surfactants, and combinations thereof; and
(4) a catalytic amount of polymerization initiator.

It is preferred that the ethylenically unsaturated monomer containing at least one quaternary ammonium group employed in the production of the polymeric core component be a salt selected from the group consisting of vinylbenzyltrimethylammonium salts, acryloyloxyethyltrimethylammonium salts, acryloyloxyethyldiethylmethylammonium salts, methacryloyloxyethyltrimethylammonium salts, methacryloyloxyethylbenzyldimethylammonium salts, acryloyloxyethylbenzyldimethylammonium salts, 2-hydroxy-3-methacryloyloxypropyltrimethylammonium salts, 2-hydroxy-3-acryloyloxypropyltrimethylammonium salts, methacrylamidopropyltrimethylammonium salts, and combinations thereof; wherein said salt contains at least one counter anion selected from the group consisting of halides, sulfates, alkylsulfates, arylsulfates, and combinations thereof. It is further preferred that the counter anion be a member selected from the group consisting of chloride, bromide, methbsulfate, sulfate, and combinations thereof.

The polymeric shell component comprises from about 15% to about 40% of the total weight of the core-shell particle. It is preferred that the shell component constitute from about 10% to about 30% of the total weight of the particle.

The polymeric shell component comprises the free radical polymerization reaction product of a mixture comprising:
(1) about 5.0% to about 35.0% (preferably from about 10.0% to about 30.0%) by total weight of the mixture of a member selected from the group consisting of amine-containing ethylenically unsaturated monomers and combinations thereof;
(2) about 10.0% to about 80.0% (preferably from about 15.0% to about 80.0%) by total weight of the mixture of a member selected from the group consisting of acrylic esters of alcohols containing from 1 to 22 carbon atoms, methacrylic esters of alcohols containing from 1 to 22 carbon atoms, styrene, substituted styrenes, acrylonitrile, methacrylonitrile, vinyl chloride, vinylidene chloride, vinyl ethers, vinyl esters, N-vinyl amides, acrylamide, N-alkyl-substituted acrylamides, methacrylamide, N-alkyl-substituted methacrylamides, and combinations thereof;
(3) up to about 15.0% (preferably up to about 10.0%) by total weight of the mixture of a member selected from the group consisting of ethylenically unsaturated monomers containing at least one quaternary ammonium group and combinations thereof;
(4) up to about 8.0% (preferably up to about 5.0%) by total weight of the mixture of a member selected from the group consisting of ethylenically unsaturated monomers containing at least one hydroxyl group and combinations thereof;
(5) up to about 8.0% (preferably up to about 5.0%) by total weight of the mixture of a member selected from the group consisting of N-hydroxymethylacrylamide, N-hydroxymethylmethacrylamide, N-alkoxymethylacrylamide, N-alkoxymethylmethacrylamide, and combinations thereof;
(6) up to about 4.0% (preferably up to about 3.0%) by total weight of the mixture of a chain transfer agent;
(7) about 0.5% to about 8.0% (preferably from about 1.0% to about 6.0%) by total weight of the mixture of a surfactant about selected from the group consisting of nonionic surfactants, cationic surfactants, and combinations thereof; and
(8) a catalytic amount of polymerization initiator.

Preferably, the polymeric shell component comprises the free radical polymerization reaction product of a mixture further comprising about 0.5% to about 30.0% (preferably about 5.0% to about 20%) by total weight of the mixture of stabilizer selected from the group consisting of ultraviolet absorbers which contain at least one ethylenically unsaturated group, radical scavengers which contain at least one ethylenically unsaturated group, antioxidants which contain at least one ethylenically unsaturated group, peroxide decomposers which contain at least one ethylenically unsaturated group, and combinations thereof; and wherein said stabilizer is covalently bound to said shell component.

The cationic core-shell particles of the present invention differ from traditional core-shell polymers in that the shell component contains basic groups and is acid-swellable (i.e., can be neutralized with acid). These basic groups are provided by the use of amine-functional monomers in the production of the acid-swellable polymeric shell component of the core-shell particle. The amine-containing ethylenically unsaturated monomers are other than any of the other monomers used in the formation of the shell component. Amine-containing ethylenically unsaturated monomers which are suitable for use in the present invention include those compounds containing both polymerizable ethylenic unsaturation and at least one amine group, which may be primary, secondary, or tertiary. Preferred amine-containing ethylenically unsaturated monomers include dimethylaminoethyl acrylate, dimethylaminoethyl methacrylate, diethylaminoethyl methacrylate, t-butylaminoethyl methacrylate, dimethylaminopropyl methacrylamide, allylamine, 2-vinylpyridine, 4-vinylpyridine, and the like. The amine-containing ethylenically unsaturated monomer comprises from about 5.0% to about 35.0%, preferably from about 10.0% to about 30.0%, by total weight of the mixture employed in the free radical polymerization reaction used to produce the polymeric shell component of the core-shell particle.

The incorporation of a stabilizer in the free radical polymerization reaction employed to produce the polymeric shell component of the core-shell particle results in the stabilizer being covalently bonded to the polymeric shell component. Any ultraviolet absorber, radical scavenger, antioxidant, or peroxide decomposer which contains at least one ethylenically unsaturated group (thereby being capable of covalent bonding to the polymeric shell component via free radical polymerization reaction) is suitable for use in the present invention. Commonly known methods of producing such compounds containing at least one ethylenically unsaturated group include acryloylation and reacting the compound to be modified with a reactant that contains at least one acryloyl group (e.g., glycidyl (meth)acrylate or isocyanatoethyl (meth)acrylate). Where an ultraviolet absorber is employed as a stabilizer it is preferred that the absorber be a member selected from the group consisting of hydroxyphenylbenzotriazoles containing at least one ethylenically unsaturated group, hydroxyphenylbenzophenones containing at least one ethylenically unsaturated group, porphines which have been modified to contain at least one ethylenically unsaturated group, and combinations thereof. Where a radical scavenger is employed as a stabilizer it is preferred that the scavenger be a member selected from the group consisting of tetramethylpiperadine derivatives containing at least one ethylenically unsaturated group and combinations thereof. Where an antioxidant is employed as a stabilizer it is preferred that the antioxidant be a member selected from the group consisting of sterically-hindered phenols containing at least one ethylenically unsaturated group, diarylamines containing at least one ethylenically unsaturated group, and combinations thereof. Where a peroxide decomposer is employed as a stabilizer it is preferred that the decomposer be a member selected from the group consisting of triphenyl phosphites which have been modified to contain at least one ethylenically unsaturated group, mercaptans which have been modified to contain at least one ethylenically unsaturated group, and combinations thereof. Suitable modified triphenyl phosphites and modified mercaptans (such as modified thiodipropionic acids, thiobenzimidazoles, bisaryldisulphides, and the like) may be produced by any method which results in the modified compound containing at least one ethylenically unsaturated group. For example, triphenyl phosphite can be prepared with a combination of styryl phenol and 2,4-di-tertiary butyl phenol. Likewise, thiodipropionic acid can be reacted with glycidyl methacrylate to produce the modified compound.

The dyes that are commonly employed in aqueous ink jet inks are anionic, containing sulfonic acid groups. The cationic nature of the core-shell particle serves to fix such anionic dyes. Where desired, the core-shell particle's cationic nature may be increased by incorporating ethylenically unsaturated monomer containing at least one quaternary ammonium group in the production of the polymeric shell component at a level up to about 15.0% (preferably up to about 10.0%) by total weight of the mixture employed in the free radical polymerization reaction. Where employed, it is preferred that said ethylenically unsaturated monomer be a salt selected from the group consisting of vinylbenzyltrimethylammonium salts, acryloyloxyethyltrimethylammonium salts, acryloyloxyethyldiethylmethylammonium salts, methacryloyloxyethyltrimethylammonium salts, methacryloyloxyethylbenzyldimethylammonium salts, acryloyloxyethylbenzyldimethylammonium salts, 2-hydroxy-3-methacryloyloxypropyltrimethylammonium salts, 2-hydroxy-3-acryloyloxypropyltrimethylammonium salts, methacrylamidopropyltrimethylammonium salts, and combinations thereof; wherein said salt contains at least one counter anion selected from the group consisting of halides, sulfates, alkylsulfates, arylsulfates, and combinations thereof. It is further preferred that the counter anion be a member selected from the group consisting of chloride, bromide, methosulfate, sulfate, and combinations thereof.

Where desired, the core-shell particle may be given hydroxyl functionality via the inclusion in the free radical polymerization reaction employed to produce the polymeric shell component of up to about 8.0% (preferably up to about 5.0%) by total weight of the mixture of hydroxyl-containing monomer. The hydroxyl-containing monomers are other than any of the other monomers used in the formation of the shell component. Hydroxyl-containing monomers which are suitable for use in the present invention include those monomers containing polymerizable ethyleneic unsaturation and at least one hydroxyl group. Preferred hydroxyl-containing monomers include hydroxyethyl acrylate, hydroxypropyl acrylate, hydroxybutyl acrylate, hydroxyethyl methacrylate, hydroxypropyl methacrylate, butanediol monovinyl ether, allyl alcohol, and the like. The presence of hydroxyl groups in the core-shell particle facilitates the linking with cross-linking agents that are conventionally used in ink jet receptive coatings (such as aminoplast resins, glyoxal, glutaraldehyde, and the like).

Where desired, the core-shell particles may also be made self cross-linkable via the inclusion in the free radical polymerization reaction employed to produce the polymeric shell component of up to about 8.0% (preferably up to about 5.0%) by total weight of the mixture of a member selected from the group consisting of N-hydroxymethylacrylamide, N-hydroxymethylmethacrylamide, N-alkoxymethylacrylamide, N-alkoxymethylmethacrylamide, and combinations thereof.

Where desired, up to about 4.0% (preferably up to about 3.0%) by total weight of the mixture of a chain transfer agent may be employed in the shell component polymerization reaction in order to lower the molecular weight of the polymer. Preferred chain transfer agents include dodecyl mercaptan, 2-mercaptoethanol, alkyl mercaptopropionates, mercaptoacetic acid, mercaptopropionic acid, octyl mercaptan, and the like.

Surfactants suitable for use in the free radical polymerization reactions include members selected from the group consisting of nonionic surfactants, cationic surfactants, and combinations thereof. Preferred nonionic surfactants include ethoxylated alkylphenols, ethoxylated fatty alcohols, ethylene oxide/propylene oxide block copolymers, and the like. Preferred cationic surfactants include, but are not limited to, the following: alkyltrimethylammonium salts wherein the alkyl group contains from 8 to 22 (preferably 12 to 18) carbon atoms and the counterion of the salt is a member selected from the group consisting of chloride, bromide, methylsulfate, and ethylsulfate; alkylbenzyldimethylammonium salts wherein the alkyl group contains from 8 to 22 (preferably 12 to 18) carbon atoms and the counterion of the salt is a member selected from the group consisting of chloride, bromide, methylsulfate, and ethylsulfate; and alkylpyridinium salts wherein the alkyl group contains from 8 to 22 (preferably 12 to 18) carbon atoms and the counterion of the salt is a member selected from the group consisting of chloride, bromide, methylsulfate, and ethylsulfate. The surfactant comprises from about 0.5% to about 8.0%, preferably from about 1.0% to about 6.0%, by total weight of the mixtures employed in the free radical polymerization reactions.

A catalytic amount of polymerization initiator is used in the free radical polymerization reactions. The amount of initiator employed commonly comprises from about 0.1% to about 3.0% (preferably from about 0.2% to about 2.0%) by weight of the total mixture used to produce the emulsion polymer. Traditional emulsion polymerization initiators (such as thermal initiators, redox initiators, and the like) are suitable for use in the emulsion polymerization reaction. Examples of suitable thermal initiators include the following: t-butyl hydroperoxide, di-t-butyl peroxide, benzoyl peroxide, benzoyl hydroperoxide, 2,4-dichlorobenzoyl peroxide, t-butyl peracetate, azobisisobutyronitrile, and isopropyl peroxycarbonate. Examples of suitable redox initiators include cumene hydroperoxide-sodium metabisulfite, cumene hydroperoxide-iron (II) sulfate, and the like. Preferred initiators include water-soluble azo compounds (such as V-50 or VA-086 manufactured by Wako Chemicals).

Where desired, the core-shell particle may comprise a plurality of shell components, each disposed about the core component.

Latexes suitable for use as ink jet receptive coatings in the present invention include aqueous suspensions of cationic core-shell particles. It is preferred that such latexes have a solids content in the range of about 25.0% to about 50.0%, with the more preferred range being about 35.0% to about 45.0%.

Preferred latexes suitable for use as ink jet receptive coatings in the present invention also include aqueous suspensions of cationic core-shell particles wherein the pH of the latex is adjusted to a level in the range of about 3.5 to about 7.0 (preferably from 4.0 to about 6.0) in order to swell or substantially, but not totally, dissolve the polymeric shell component so as to form core particles with attached colloidal dispersion polymer. Neutralization of the core-shell particles to form the pH-adjusted aqueous-dispersed latexes can be accomplished via the addition of an acid selected from the group consisting of mineral acids, water-soluble carboxylic acids, water-soluble sulfonic acids, and combinations thereof.

It is preferred to use low molecular weight carboxylic acids such as acetic acid, propionic acid, glycolic acid, lactic acid, and combinations thereof for the neutralization, as these acids will evaporate readily upon drying of the coating containing the polymer (thereby rendering the coating water-insoluble). Furthermore, these acids are less corrosive to coating equipment than are the stronger sulfonic and mineral acids.

As the acid-neutralization causes the polymeric shell component to swell and become more soluble, a substantial increase in viscosity occurs. It is preferred that these pH-adjusted aqueous-dispersed latexes have a solids content in the range of about 25.0% to about 50.0%, with the more preferred range being about 35.0% to about 45.0%.

The cationic latexes of the present invention are superior ink jet receptive coatings. Such ink jet receptive coatings can be employed to produce ink jet printable products via the process of coating a chosen substrate on at least one side with the ink jet receptive coating. Substrates which are suitable for use in producing such ink jet printable products include paper, paperboard, wood, plastic film, metal foil, textiles, and the like. Where desired, any of the pigments traditionally used in ink jet receptive coatings can be employed in the coating provided that the pigments are compatible with a cationic binder. Such pigments include the following: silica, alumina, plastic pigments, calcium carbonate, and kaolin clay.

Where desired, cationic and nonionic binders can be incorporated in the ink jet receptive coatings. These binders include, but are not limited to, the following: polyvinyl alcohol, cationic polyvinyl alcohol, polyvinylpyrrolidone, cationic vinylpyrrolidone copolymers, polyethyloxazoline, cationic water-soluble acrylic polymers, nonionic water-soluble acrylic polymers, starch, cationic starch, polyethylene glycol, methylcellulose, hydroxyethylcellulose, and mixtures thereof.

In cases where the ink jet receptive coatings contain hydroxyl functionality, cross-linkers that are traditionally used with hydroxyl-functional resins can be added to the coating. Such cross-linkers include urea-formaldehyde resins, melacnine-formaldehyde resins, glyoxal, glutaraldehyde, titanates, zirconium salts, and the like.

As appreciated in the art, the exact components and properties of components desired for any coating application can vary and, therefore, routine experimentation may be required to determine the optional components and proportions of components for a given application and desired properties.

### EXAMPLE 1

A core-shell polymer composition having an acid-insoluble, emulsion polymer core and an acid-soluble, emulsion polymer shell was prepared via the following method. A round-bottom flask equipped with a thermometer, stirrer, and heating mantle was charged with 393.6 g of deionized water, 30.0 g of Arquad C-50 surfactant (a 50% solution of dodecyltrimethylammonium chloride in isopropyl alcohol available from Akzo), 29.9 g of styrene, 1.6 g of methacryloyloxyethyltrimethylammonium chloride (METAC), and a solution of 6.0 g of V-50 (an azo free radical initiator available from Wako Chemicals) in 15.0 g of deionized water. The mixture was heated to 60°C, and 169.9 g of styrene and 8.9 g of METAC were added concurrently over a three-hour period. When the monomer feed was completed, the temperature of the reaction was increased to 70°C and stirring was continued for one hour. The core polymer was subsequently cooled to 60°C, a solution of 1.8 g of V-50 in 32.0 g of deionized water was added, and an emulsion comprising 70.0 g of deionized water, 10.0 g of Arquad C-50 surfactant, 54.0 g of styrene, 27.0 g of dimethylaminoethyl methacrylate, and 9.0 g of METAC was added over a one-hour period. When the feed was completed, the temperature of the reaction was increased to 70°C and stirring was continued for one hour. After this period the temperature was raised to 85°C, 0.45 g of t-butyl hydroperoxide and a solution of 0.88 g of isoascorbic acid in 10.0 g of deionized water was added, and stirring was continued for a two-hour period to scavenge any residual monomer.

The resulting core-shell polymer composition had a solids content of 37.2%, a viscosity of 45 cP, a pH of 7.5, and an average particle size of 49 nm.

### EXAMPLE 2

An ink jet receptive coating was prepared by mixing together 60 parts on a dry basis of the cationic core-shell polymer composition of Example 1, 40 parts on a dry basis of CAB-O-SPERSE PG003 (a 40% aqueous dispersion of fumed alumina available from Cabot Corp.), and 10 parts on a dry basis of a colloidal dispersion made by adjusting the pH of the core-shell polymer composition of Example 1 to 3.5 with lactic acid. The solids level of the resulting ink jet receptive paper coating was adjusted to 30 weight-% with deionized water.

The coating was applied to Epson Heavyweight Matte paper using a No. 8 wire-wound rod. The coated sheets were then dried for 5 minutes at 105°C, and test prints were made on dried sheets using an Epson 880 printer. The prints made on the coating exhibited both high color density and sharp print quality.

### EXAMPLE 3

An ink jet receptive coating was prepared by mixing together 60 parts on a dry basis of the cationic core-shell polymer composition of Example 1, 40 parts on a dry basis of CAB-O-SPERSE PG003 (a 40% aqueous dispersion of fumed alumina available from Cabot Corp.), and 10 parts on a dry basis of TRUDOT P2605 (a binder available from MeadWestvaco Corp.). The solids level of the resulting ink jet receptive paper coating was adjusted to 30 weight-% with deionized water.

The coating was applied to Epson Heavyweight Matte paper using a No. 8 wire-wound rod. The coated sheets were then dried for 5 minutes at 105°C, and test prints were made on dried sheets using an Epson 880 printer. The prints made on the coating exhibited both high color density and sharp print quality.

### EXAMPLE 4

A core-shell polymer composition having an acid-insoluble, emulsion polymer core and an acid-soluble, emulsion polymer shell was prepared via the following method. A round-bottom flask equipped with a thermometer, stirrer, and heating mantle was charged with 393.6 g of deionized water, 30.0 g of Arquad C-50 surfactant (a 50% solution of dodecyltrimethylammonium chloride in isopropyl alcohol available from Akzo), 38.5 g of styrene, 2.0 g of methacryloyloxyethyltrimethylammonium chloride (METAC), and a solution of 6.0 g of V-50 (an azo free radical initiator available from Wako Chemicals) in 15.0 g of deionized water. The mixture was heated to 60°C, and 218.2 g of styrene and 11.5 g of METAC were added concurrently over a three-hour period. When the monomer feed was completed, the temperature of the reaction was increased to 70°C and stirring was continued for one hour. The core polymer was subsequently cooled to 60°C, a solution of 1.8 g of V-50 in 32.0 g of deionized water was added, and an emulsion comprising 70.0 g of deionized water, 10.0 g of Arquad C-50 surfactant, 18.0 g of styrene, 9.0 g of dimethylaminoethyl methacrylate, and 3.0 g of METAC was added over a one-hour period. When the feed was completed, the temperature of the reaction was increased to 70°C and stirring was continued for one hour. After this period the temperature was raised to 85°C, 0.45 g of t-butyl hydroperoxide and a solution of 0. 88 g of isoascorbic acid in 10.0 g of deionized water was added, and stirring was continued for a two-hour period to scavenge any residual monomer.

The resulting core-shell polymer composition had a solids content of 37.2%, a viscosity of 26 cP, a pH of 7.0, and an average particle size of 52 nm.

### EXAMPLE 5

An ink jet receptive coating was prepared by mixing together 60 parts on a dry basis of the cationic core-shell polymer composition of Example 4, 40 parts on a dry basis of CAB-O-SPERSE PG003 (a 40% aqueous dispersion of fumed alumina available from Cabot Corp.), and 10 parts on a dry basis of a colloidal dispersion made by adjusting the pH of the core-shell polymer composition of Example 4 to 3.5 with lactic acid. The solids level of the resulting ink jet receptive paper coating was adjusted to 30 weight-% with deionized water.

The coating was applied to Epson Heavyweight Matte paper using a No. 8 wire-wound rod. The coated sheets were then dried for 5 minutes at 105°C, and test prints were made on dried sheets using an Epson 880 printer. The prints made on the coating exhibited both high color density and sharp print quality.

### EXAMPLE 6

A core-shell polymer composition having an acid-insoluble, emulsion polymer core and an acid-soluble, emulsion polymer shell was prepared via the following method. A round-bottom flask equipped with a thermometer, stirrer, and heating mantle was charged with 393.6 g of deionized water, 30.0 g of Arquad C-50 surfactant (a 50% solution of dodecyltrimethylammonium chloride in isopropyl alcohol available from Akzo), 29.9 g of styrene, 1.6 g of methacryloyloxyethyltrimethylammonium chloride (METAC), and a solution of 6.0 g of V-50 (an azo free radical initiator available from Wako Chemicals) in 15.0 g of deionized water. The mixture was heated to 60°C, and 169.9 g of styrene and 8.9 g of METAC were added concurrently over a three-hour period. When the monomer feed was completed, the temperature of the reaction was increased to 70°C and stirring was continued for one hour. The core polymer was subsequently cooled to 60°C, a solution of 1.8 g of V-50 in 32.0 g of deionized water was added, and an emulsion comprising 70.0 g of deionized water, 10.0 g of Arquad C-50 surfactant, 45.0 g of styrene, 27.0 g of dimethylaminoethyl methacrylate, 9.0 g of 2-hydroxyethyl methacrylate, and 9.0 g of METAC was added over a one-hour period. When the feed was completed, the temperature of the reaction was increased to 70°C and stirring was continued for one hour. After this period the temperature was raised to 85°C, 0.45 g of t-butyl hydroperoxide and a solution of 0.88 g of isoascorbic acid in 10.0 g of deionized water was added, and stirring was continued for a two-hour period to scavenge any residual monomer.

The resulting core-shell polymer composition had a solids content of 41.1 %, a viscosity of 56 cP, a pH of 7.8, and an average particle size of 97 nm.

### EXAMPLE 7

An ink jet receptive coating was prepared by mixing together 60 parts on a dry basis of the cationic core-shell polymer composition of Example 6, 40 parts on a dry basis of CAB-O-SPERSE PG003 (a 40% aqueous dispersion of fumed alumina available from Cabot Corp.), and 10 parts on a dry basis of a colloidal dispersion made by adjusting the pH of the core-shell polymer composition of Example 6 to 3.5 with lactic acid. The solids level of the resulting ink jet receptive paper coating was adjusted to 30 weight-% with deionized water.

The coating was applied to Epson Heavyweight Matte paper using a No. 8 wire-wound rod. The coated sheets were then dried for 5 minutes at 105°C, and test prints were made on dried sheets using an Epson 880 printer. The prints made on the coating exhibited both high color density and sharp print quality.

### EXAMPLE 8

A core-shell particle latex having an acid-insoluble, emulsion polymer core and an acid-swellable, emulsion polymer shell containing bound ultraviolet absorber was prepared as follows. To a 2 liter round bottom flask fitted with a stirrer, a reflux condenser, two addition funnels, a heating mantle, and a temperature controller was charged 330 grams of deioinzed water, 30.0 g of ARQUAD C-50 (a cationic surfactant available from Akzo Nobel), 30.0 g of styrene, 1.6 g of a 75% aqueous solution of methacryloyloxyethyltrimethylammonium chloride (METAC), and a solution of 6.0 g of V-50 (a cationic initiator available from Wako Chemicals) in 15.0 g of water. The charge was heated to 60°C and 169.5 g of styrene and 9.9 g of METAC were added concurrently over three hours. Then the batch was heated to 70°C and held there for one hour to complete the formation of the core latex. The batch was then cooled to 60°C, and a solution of 1.8 g of V-50 in 32.0 g of water was added. Then a premixed shell monomer feed was added over one hour. The shell monomer feed had been made by charging a flask with 54.0 g of styrene, 4.5 g of meta-TMI (an isocyanate-functional styrenic monomer available from Cytec Industries), 1.5 g of TINUVIN 1130 (a hydroxyl-functional ultraviolet absorber available from Ciba Speciality Chemicals), and one drop of dibutyltin dilaurate. This mixture had been allowed to react at room temperature overnight to form a solution of a polymerizable ultraviolet absorber in styrene. To this solution was then added 27.0 g of dimethylaminoethyl methacrylate, 10.0 g of ARQUAD C-50, and 70.0 g of water to form a pre-emulsified monomer feed. Nine g of METAC were added concurrently to the batch with this emulsified feed. When the monomer additions were completed, the temperature was increased to 70°, and 0.45 g of t-butyl hydroperoxide and a solution of 0.88 g of isoascorbic acid in 10.0 g of water were added. The batch was then heated to 85°C and held there for two hours to complete the polymerization. The resultant cationic core-shell particle latex had a solids content of 41.4%, a pH of 7.6, a viscosity of 60 cP, and an average particle size of 47 nm.

### EXAMPLE 9

A core-shell polymer composition having an acid-insoluble, emulsion polymer core and an acid-swellable, emulsion polymer shell containing bound ultraviolet absorber can be prepared as follows. A 2-liter round-bottom flask equipped with a thermometer, stirrer, and heating mantle is charged with 393.6 g of deionized water, 30.0 g of ARQUAD C-50 surfactant (a 50% solution of dodecyltrimethylammonium chloride in isopropyl alcohol available from Akzo Nobel), 29.9 g of styrene, 1.6 g of methacryloyloxyethyltrimethylammonium chloride (METAC), and a solution of 6.0 g of V-50 (an azo free radical initiator available from Wako Chemicals) in 15.0 g of deionized water. The mixture is heated to 60°C, and 169.9 g of styrene and 8.9 g of METAC are added concurrently over a three-hour period. When the monomer feed is completed, the temperature of the reaction is increased to 70°C and stirring is continued for one hour. The core polymer component is subsequently cooled to 60°C, a solution of 1.8 g of V-50 in 32.0 g of deionized water is added, and a solution comprising 10.8 g of TINUVIN 796 (an ethylenically unsaturated hydroxyphenylbenzoltriazole ultraviolet absorber available from Ciba Speciality Chemicals) dissolved in 42.0 of styrene and 27.0 g of dimethylaminoethyl methacrylate is added over a one-hour period. A separate charge of 10.0 g of METAC is concurrently added over the one-hour period to the core polymer component.

When the feeds are completed, the temperature of the reaction is increased to 70°C and stirring is continued for one hour. After this period the temperature is raised to 85°C, 0.45 g of t-butyl hydroperoxide and a solution of 0.88 g of isoascorbic acid in 10.0 g of deionized water is added, and stirring was continued for a two-hour period to scavenge any residual monomer.

### EXAMPLE 10

An ink jet receptive coating can be prepared by mixing together 60 parts on a dry basis of the cationic core-shell polymer composition of Example 9, 40 parts on a dry basis of CAB-O-SPERSE PG003 (a 40% aqueous dispersion of fumed alumina available from Cabot Corp.), and 10 parts on a dry basis of a colloidal dispersion made by adjusting the pH of the core-shell polymer composition of Example 9 to 3.5 with lactic acid.

### EXAMPLE 11

An ink jet receptive coating can be prepared by mixing together 60 parts on a dry basis of the cationic core-shell polymer composition of Example 9, 40 parts on a dry basis of CAB-O-SPERSE PG003 (a 40% aqueous dispersion of fumed alumina available from Cabot Corp.), and 10 parts on a dry basis of TRUDOT P2605 (a binder available from MeadWestvaco Corp.).

### EXAMPLE 12

A core-shell polymer composition having an acid-insoluble, emulsion polymer core and an acid-swellable, emulsion polymer shell containing bound ultraviolet absorber can be prepared as follows. A 2-liter round-bottom flask equipped with a thermometer, stirrer, and heating mantle is charged with 394.0 g of deionized water, 30.0 g of ARQUAD C-50 surfactant (a 50% solution of dodecyltrimethylammonium chloride in isopropyl alcohol available from Akzo Nobel), 30.0 g of styrene, 1.5 g of methacryloyloxyethyltrimethylammonium chloride (METAC), and a solution of 6.0 g of V-50 (an azo free radical initiator available from Wako Chemicals) in 15.0 g of deionized water. The mixture is heated to 60°C, and 170.0 g of styrene and 8.5 g of METAC are added concurrently over a three-hour period. When the monomer feed is completed, the temperature of the reaction is increased to 70°C and stirring is continued for one hour. The core polymer is subsequently cooled to 60°C, a solution of 1.8 g of V-50 in 32.0 g of deionized water is added, and a solution comprising 6.3 g of TINUVIN 796 (an ethylenically unsaturated hydroxyphenylbenzoltriazole ultraviolet absorber available from Ciba Speciality Chemicals) dissolved in 47.0 of styrene and 28.0 g of dimethylaminoethyl methacrylate is added over a one-hour period. A separate charge of 10.0 g of METAC is concurrently added over the one-hour period to the core polymer component.

When the feed is completed, the temperature of the reaction is increased to 70°C and stirring is continued for one hour. After this period the temperature is raised to 85°C, 0.45 g of t-butyl hydroperoxide and a solution of 0.88 g of isoascorbic acid in 10.0 g of deionized water is added, and stirring is continued for a two-hour period to scavenge any residual monomer.

### EXAMPLE 13

An ink jet receptive coating can be prepared by mixing together 60 parts on a dry basis of the cationic core-shell polymer composition of Example 12, 40 parts on a dry basis of CAB-O-SPERSE PG003 (a 40% aqueous dispersion of fumed alumina available from Cabot Corp.), and 10 parts on a dry basis of a colloidal dispersion made by adjusting the pH of the core-shell polymer composition of Example 5 to 3.5 with lactic acid.

### EXAMPLE 14

A core-shell polymer composition having an acid-insoluble, emulsion polymer core and an acid-swellable, emulsion polymer shell containing bound ultraviolet absorber can be prepared as follows. A 2-liter round-bottom flask equipped with a thermometer, stirrer, and heating mantle is charged with 393.0 g of deionized water, 29.0 g of ARQUAD C-50 surfactant (a 50% solution of dodecyltrimethylammonium chloride in isopropyl alcohol available from Akzo Nobel), 31.0 g of styrene, 1.5 g of methacryloyloxyethyltrimethylammonium chloride (METAC), and a solution of 6.0 g of V-50 (an azo free radical initiator available from Wako Chemicals) in 15.0 g of deionized water. The mixture is heated to 60°C, and 169.9 g of styrene and 8.9 g of METAC are added concurrently over a three-hour period. When the monomer feed is completed, the temperature of the reaction is increased to 70°C and stirring is continued for one hour. The core polymer is subsequently cooled to 60°C, a solution of 1.8 g of V-50 in 32.0 g of deionized water is added, and a solution comprising 10.8 g of TINUVIN 796 (an ethylenically unsaturated hydroxyphenylbenzoltriazole ultraviolet absorber available from Ciba Speciality Chemicals) dissolved in 34.0 of styrene and 27.0 g of dimethylaminoethyl methacrylate is added over a one-hour period. A separate solution of 9.0 g of METAC and 9.0 g of hydroxyethyl methacrylate is concurrently added over the one-hour period to the core polymer component.

When the feed is completed, the temperature of the reaction is increased to 70°C and stirring was continued for one hour. After this period the temperature is raised to 85°C, 0.45 g of t-butyl hydroperoxide and a solution of 0.88 g of isoascorbic acid in 10.0 g of deionized water is added, and stirring is continued for a two-hour period to scavenge any residual monomer.

### EXAMPLE 15

An ink jet receptive coating can be prepared by mixing together 60 parts on a dry basis of the cationic core-shell polymer composition of Example 14, 40 parts on a dry basis of CAB-O-SPERSE PG003 (a 40% aqueous dispersion of fumed alumina available from Cabot Corp.), and 10 parts on a dry basis of a colloidal dispersion made by adjusting the pH of the core-shell polymer composition of Example 7 to 3.5 with lactic acid.

## Claims

1. A cationic core-shell particle suitable for use in formulating ink jet receptive coatings comprising:
(A) a polymeric core component, said core component comprising the free radical polymerization reaction product of a mixture comprising:
(1) 80.0% to 99.5% by total weight of the monomer mixture of a member selected from the group consisting of acrylic esters of alcohols containing from 1 to 22 carbon atoms, methacrylic esters of alcohols containing from 1 to 22 carbon atoms, styrene, substituted styrenes, acrylonitrile, methacrylonitrile, vinyl chloride, vinylidene chloride, vinyl ethers, vinyl esters, N-vinyl amides, acrylamides, methacrylamides, and combinations thereof;
(2) 0.5% to 20.0% by total weight of the monomer mixture of a member selected from the group consisting of ethylenically unsaturated monomers containing at least one quaternary ammonium group and combinations thereof;
(3) 0.5% to 8.0% by total weight of the mixture of a surfactant selected from the group consisting of nonionic surfactants, cationic surfactants, and combinations thereof; and
(4) a catalytic amount of polymerization initiator; and
(B) an acid-swellable polymeric shell component disposed generally about said core component, said shell component comprising the free radical polymerization reaction product of a mixture comprising:
(1) 5.0% to 35.0% by total weight of the mixture of a member selected from the group consisting of amine-containing ethylenically unsaturated monomers and combinations thereof;
(2) 10.0% to 80.0% by total weight of the mixture of a member selected from the group consisting of acrylic esters of alcohols containing from 1 to 22 carbon atoms, methacrylic esters of alcohols containing from 1 to 22 carbon atoms, styrene, substituted styrenes, acrylonitrile, methacrylonitrile, vinyl chloride, vinylidene chloride, vinyl ethers, vinyl esters, N-vinyl amides, acrylamide, N-alkyl-substituted acrylamides, methacrylamide, N-alkyl-substituted methacrylamides, and combinations thereof;
(3) up to 15.0% by total weight of the mixture of a member selected from the group consisting of ethylenically unsaturated monomers containing at least one quaternary ammonium group and combinations thereof;
(4) up to 8.0% by total weight of the mixture of a member selected from the group consisting of ethylenically unsaturated monomers containing at least one hydroxyl group and combinations thereof;
(5) up to 8.0% by total weight of the mixture of a member selected from the group consisting of N-hydroxymethylacrylamide, N-hydroxymethylmethacrylamide, N-alkoxymethylacrylamide, N-alkoxymethyhnethacrylamide, and combinations thereof;
(6) up to 4.0% by total weight of the mixture of a chain transfer agent;
(7) 0.5% to 8.0% by total weight of the mixture of a surfactant selected from the group consisting of nonionic surfactants, cationic surfactants, and combinations thereof; and
(8) a catalytic amount of polymerization initiator.

2. The core-shell particle of claim 1 wherein said shell component comprises the free radical polymerization reaction product of a mixture further comprising 0.5% to 30.0% by total weight of the mixture of stabilizer selected from the group consisting of ultraviolet absorbers which contain at least one ethylenically unsaturated group, radical scavengers which contain at least one ethylenically unsaturated group, antioxidants which contain at least one ethylenically unsaturated group, peroxide decomposers which contain at least one ethylenically unsaturated group, and combinations thereof; and wherein said stabilizer is covalently bound to said shell component.

3. The core-shell particle of claim 1 which comprises:
(A) a polymeric core component, said core component comprising the free radical polymerization reaction product of a mixture comprising:
(1) 85.0% to 98.0% by total weight of the monomer mixture of a member selected from the group consisting of acrylic esters of alcohols containing from 1 to 22 carbon atoms, methacrylic esters of alcohols containing from 1 to 22 carbon atoms, styrene, substituted styrenes, acrylonitrile, methacrylonitrile, vinyl chloride, vinylidene chloride, vinyl ethers, vinyl esters, N-vinyl amides, acrylamides, methacrylamides, and combinations thereof; and
(2) 2.0% to 15.0% by total weight of the monomer mixture of a member selected from the group consisting of ethylenically unsaturated monomers containing at least one quaternary ammonium group and combinations thereof;
(3) 1.0% to 6.0% by total weight of the mixture of a surfactant about selected from the group consisting of nonionic surfactants, cationic surfactants, and combinations thereof; and
(4) a catalytic amount of polymerization initiator; and
(B) an acid-swellable polymeric shell component disposed generally about said core component, said shell component comprising the free radical polymerization reaction product of a mixture comprising:
(1) 10.0% to 30.0% by total weight of the mixture of a member selected from the group consisting of amine-containing ethylenically unsaturated monomers and combinations thereof;
(2) 15.0% to 80.0% by total weight of the mixture of a member selected from the group consisting of acrylic esters of alcohols containing from 1 to 22 carbon atoms, methacrylic esters of alcohols containing from 1 to 22 carbon atoms, styrene, substituted styrenes, acrylonitrile, methacrylonitrile, vinyl chloride, vinylidene chloride, vinyl ethers, vinyl esters, N-vinyl amides, acrylamide, N-alkyl-substituted acrylamides, methacrylamide, N-alkyl-substituted methacrylamides, and combinations thereof;
(3) up to 10.0% by total weight of the mixture of a member selected from the group consisting of ethylenically unsaturated monomers containing at least one quaternary ammonium group and combinations thereof;
(4) up to 5.0% by total weight of the mixture of a member selected from the group consisting of ethylenically unsaturated monomers containing at least one hydroxyl group and combinations thereof;
(5) up to 5.0% by total weight of the mixture of a member selected from the group consisting of N-hydroxymethylacrylamide, N-hydroxymethylmethacrylamide, N-alkoxymethylacrylamide, N-alkoxymethylmethacrylamide, and combinations thereof;
(6) up to 3.0% by total weight of the mixture of a chain transfer agent;
(7) 1.0% to 6.0% by total weight of the mixture of a surfactant about selected from the group consisting of nonionic surfactants, cationic surfactants, and combinations thereof; and
(8) a catalytic amount of polymerization initiator.

4. The core-shell particle of claim 3 wherein said shell component comprises the free radical polymerization reaction product of a mixture further comprising 5.0% to 20.0% by total weight of the mixture of stabilizer selected from the group consisting of ultraviolet absorbers which contain at least one ethylenically unsaturated group, radical scavengers which contain at least one ethylenically unsaturated group, antioxidants which contain at least one ethylenically unsaturated group, peroxide decomposers which contain at least one ethylenically unsaturated group, and combinations thereof; and wherein said stabilizer is covalently bound to said shell component.

5. The core-shell particle of any one of claims 1 to 4 wherein said core component constitutes from 60% to 95% of the total weight of said particle.

6. The core-shell particle of claim 5 wherein said core component constitutes from 70% to 90% of the total weight of said particle.

7. The core-shell particle of claim 5 wherein said shell component constitutes from 5% to 40% of the total weight of said particle.

8. The core-shell particle of claim 6 wherein said shell component constitutes from 10% to 30% of the total weight of said particle.

9. The core-shell particle of claim 2 wherein the ultraviolet absorber is a member selected from the group consisting of hydroxyphenylbenzotriazoles containing at least one ethylenically unsaturated group, benzophenones containing at least one ethylenically unsaturated group, modified porphines which contain at least one ethylenically unsaturated group, and combinations thereof.

10. The core-shell particle of claim 2 wherein the radical scavenger is a member selected from the group consisting of tetramethylpiperadine derivatives containing at least one ethylenically unsaturated group and combinations thereof.

11. The core-shell particle of claim 2 wherein the antioxidant is a member selected from the group consisting of sterically-hindered phenols containing at least one ethylenically unsaturated group, diarylamines containing at least one ethylenically unsaturated group, and combinations thereof.

12. The core-shell particle of claim 2 wherein the peroxide decomposer is a member selected from the group consisting of modified triphenyl phosphites which contain at least one ethylenically unsaturated group, modified mercaptans which contain at least one ethylenically unsaturated group, and combinations thereof.

13. The core-shell particle of any one of the preceding claims wherein the ethylenically unsaturated monomer containing at least one quaternary ammonium group is a salt selected from the group consisting of vinylbenzyltrimethylammonium salts, acryloyloxyethyltrimethylammonium salts, acryloyloxyethyldiethylmethylammonium salts, methacryloyloxyethyltrimethylammonium salts, methacryloyloxyethylbenzyldimethylammonium salts, acryloyloxyethylbenzyldimethylammonium salts, 2-hydroxy-3-methacryloyloxypropyltrimethylammonium salts, 2-hydroxy-3-acryloyloxypropyltrimethylammonium salts, methacrylamidopropyltrimethylammonium salts, and combinations thereof; and wherein said salt contains at least one counter anion selected from the group consisting of halides, sulfates, alkylsulfates, arylsulfates, and combinations thereof.

14. The core-shell particle of claim 13 wherein the counter anion is a member selected from the group consisting of chloride, bromide, methosulfate, sulfate, and combinations thereof.

15. The core-shell particle of any one of the preceding claims wherein the polymerization initiator comprises from 0.1% to 3.0% by total weight of the mixture employed to produce said shell component and is a member selected from the group consisting of thermal initiators, redox initiators, and combinations thereof.

16. The core-shell particle of any one of the preceding claims wherein the amine-containing ethylenically unsaturated monomer is a member selected from the group consisting of dimethylaminoethyl acrylate, dimethylaminoethyl methacrylate, diethylaminoethyl methacrylate, t-butylaminoethyl methacrylate, dimethylaminopropyl methacrylamide, allylamine, 2-vinylpyridine, 4-vinylpyridine, and combinations thereof.

17. The core-shell particle of any one of the preceding claims wherein the ethylenically unsaturated monomer containing at least one hydroxyl group is a member selected from the group consisting of hydroxyethyl acrylate, hydroxypropyl acrylate, hydroxybutyl acrylate, hydroxyethyl methacrylate, hydroxypropyl methacrylate, butanediol monovinyl ether, allyl alcohol, and combinations thereof.

18. The core-shell particle of any one of the preceding claims wherein the chain transfer agent is a member selected from the group consisting of dodecyl mercaptan, 2-mercaptoethanol, alkyl mercaptopropionates, mercaptoacetic acid, mercaptopropionic acid, octyl mercaptan, and combinations thereof.

19. The core-shell particle of any one of the preceding claims wherein the nonionic surfactant is a member selected from the group consisting of ethoxylated alkylphenols, ethoxylated fatty alcohols, ethylene oxide/propylene oxide block copolymers, and combinations thereof.

20. The core-shell particle of any one of the preceding claims wherein the cationic surfactant is a member selected from the group consisting of alkyltrimethylammonium salts wherein the alkyl group contains from 8 to 22 carbon atoms and the counterion of the salt is a member selected from the group consisting of chloride, bromide, methylsulfate, and ethylsulfate; alkylbenzyldimethylammonium salts wherein the alkyl group contains from 8 to 22 carbon atoms and the counterion of the salt is a member selected from the group consisting of chloride, bromide, methylsulfate, and ethylsulfate; alkylpyridinium salts wherein the alkyl group contains from 8 to 22 carbon atoms and the counterion of the salt is a member selected from the group consisting of chloride, bromide, methylsulfate, and ethylsulfate; and combinations thereof.

21. The core-shell particle of any one of the preceding claims wherein said core-shell particle further comprises a plurality of shell components, each disposed about said core component.

22. A latex comprising an aqueous suspension of core-shell particles of any one of the preceding claims.

23. The latex of claim 22 wherein said latex has a solids content of core-shell particles in the range of 25.0% to 50.0%.;

24. The latex of claim 23 wherein said latex has a solids content of core-shell particles in the range of 35.0% to 45.0%.

25. An ink jet receptive coating comprising the latex of any one of claims 22 to 24.

26. The ink jet receptive coating of claim 25 wherein the coating further comprises a pigment.

27. The ink jet receptive coating of claim 26 wherein the pigment is a member selected from the group consisting of silica, alumina, plastic pigments, calcium carbonate, kaolin clay, and combinations thereof.

28. An ink jet printable product comprising a substrate coated on at least one side with the coating of any one of claims 25 to 27.

29. The ink jet printable product of claim 28 wherein the substrate is a member selected from the group consisting of paper, paperboard, wood, plastic film, metal foil, textiles, and combinations thereof.

30. A latex comprising an aqueous suspension of core-shell particles of any one of claims 1 to 21 wherein the pH of the latex is adjusted to a level in the range of about 3.5 to about 7.0 via the addition of an acid selected from the group consisting of mineral acids, water-soluble carboxylic acids, water-soluble sulfonic acids, and combinations thereof.

31. The latex of claim 30 wherein the acid is a member selected from the group consisting of acetic acid, propionic acid, glycolic acid, lactic acid, and combinations thereof.

32. The latex of claim 30 wherein said latex has a solids content of core-shell particles in the range of 25.0% to 50.0%.

33. The latex of claim 30 wherein said latex has a solids content of core-shell particles in the range of 35.0% to 45.0%.

34. An ink jet receptive coating comprising the latex of any one of claims 30 to 33.

35. The ink jet receptive coating of claim 34 wherein the coating further comprises a pigment.

36. The ink jet receptive coating of claim 34 wherein the pigment is a member selected from the group consisting of silica, alumina, plastic pigments, calcium carbonate, kaolin clay, and combinations thereof.

37. An ink jet printable product comprising a substrate coated on at least one side with the coating of claim 34.

38. The ink jet printable product of claim 37 wherein the substrate is a member selected from the group consisting of paper, paperboard, wood, plastic film, metal foil, textiles, and combinations thereof.

## Revendications

1. Particule coeur-enveloppe cationique, utilisable pour la préparation de revêtements récepteurs de jet d'encre, qui comprend :
(A) un constituant de coeur polymère, qui comprend le produit de réaction de polymérisation radicalaire d'un mélange comprenant :
(1) 80,0 % à 99,5 % par rapport au poids total du mélange des monomères, d'un constituant pris parmi les esters acryliques des alcools ayant 1 à 22 atomes de carbone, les esters méthacryliques des alcools ayant 1 à 22 atomes de carbone, le styrène, les styrènes substitués, l'acrylonitrile, le méthacrylonitrile, le chlorure de vinyle, le chlorure de vinylidène, les éthers vinyliques, les esters vinyliques, les N-vinylatnides, les acrylamides, les méthacrylamides, et leurs combinaisons,
(2) 0,5 % à 20,0 % par rapport au poids total du mélange des monomères, d'un constituant pris parmi les monomères éthyléniquement insaturés, contenant au moins un groupe ammonium quaternaire, et leurs combinaisons,
(3) 0,5 % à 8,0 % par rapport au poids total du mélange, d'un tensioactif pris parmi les tensioactifs non-ioniques, les tensioactifs cationiques et leurs combinaisons, et
(4) une quantité catalytique d'un amorceur de polymérisation, et
(B) un constituant d'enveloppe polymère, apte à gonfler en milieu acide, disposé généralement autour dudit constituant de coeur, ledit constituant d'enveloppe comprenant le produit de réaction de polymérisation radicalaire d'un mélange comprenant :
(1) 5,0 % à 35,0 % par rapport au poids total du mélange, d'un constituant pris parmi les monomères éthyléniquement insaturés, portant un groupe amino, et leurs combinaisons,
(2) 10,0 % à 80,0 % par rapport au poids total du mélange, d'un constituant pris parmi les esters acryliques des alcools ayant 1 à 22 atomes de carbone, les esters méthacryliques des alcools ayant 1 à 22 atomes de carbone, le styrène, les styrènes substitués, l'acrylonitrile, le méthacrytanitrile, le chlorure de vinyle, le chlorure de vinylidène, les éthers vinyliques, les esters vinyliques, les N-vinylamides, l'acrylamide, les N-alkyl-acrylamides, le méthacrylamide, les N-alkylméthacrylamides, et leurs combinaisons,
(3) jusqu'à 15,0 % par rapport au poids total du mélange, d'un constituant pris parmi les monomères éthyléniquement insaturés, contenant au moins un groupe ammonium quaternaire, et leurs combinaisons,
(4) jusqu'à 8,0 % par rapport au poids total du mélange, d'un constituant pris parmi les monomères éthyléniquement insaturés, contenant au moins un groupe hydroxyle, et leurs combinaisons,
(5) jusqu'à 8,0 % par rapport au poids total du mélange, d'un constituant pris parmi le N-hydroxyméthyl-acrylamide, le N-hydroxyméthylméthacrylamide, les N-alcoxyméthyl-acrylamides, les N-alcoxyméthylméthacrylamides, et leurs combinaisons,
(6) jusqu'à 4,0 % par rapport au poids total du mélange, d'un agent de transfert de chaîne,
(7) 0,5 % à 8,0 % par rapport au poids total du mélange, d'un tensioactif pris parmi les tensioactifs non-ioniques, les tensioactifs cationiques, et leurs combinaisons, et
(8) une quantité catalytique d'un amorceur de polymérisation.

2. Particule coeur-enveloppe selon la revendication 1, dont ledit constituant d'enveloppe comprend le produit de réaction de polymérisation radicalaire d'un mélange qui comprend en outre 0,5 % à 30,0 % par rapport au poids total du mélange, d'un stabilisant choisi parmi les agents absorbant les rayons ultraviolets, contenant au moins un groupe éthyléniquement insaturé, les agents fixant les radicaux, contenant au moins un groupe éthyléniquement insaturé, les antioxydants contenant au moins un groupe éthyléniquement insaturé, les agents décomposant les peroxydes, contenant au moins un groupe éthyléniquement insaturé, et leurs combinaisons, ledit stabilisant étant lié de manière covalente audit constituant d'enveloppe.

3. Particule coeur-enveloppe selon la revendication 1, qui comprend :
(A) un constituant de coeur polymère, qui comprend le produit de réaction de polymérisation radicalaire d'un mélange comprenant :
(1) 85,0 % à 98,0 % par rapport au poids total du mélange des munumères, d'un constituant pris parmi les esters acryliques des alcools ayant 1 à 22 atomes de carbone, les esters méthacryliques des alcools ayant 1 à 22 atomes de carbone, le styrène, les styrènes substitués, l'acrylonitrile, le méthacrylonitrile, le chlorure de vinyle, le chlorure de vinylidène, les éthers vinyliques, les esters vinyliques, les N-vinylamides, les acrylamides, les méthacrylamides, et leurs combinaisons,
(2) 2,0 % à 15,0 % par rapport au poids total du mélange des monomères, d'un constituant pris parmi les monomères éthyléniquement insaturés, contenant au moins un groupe ammonium quaternaire, et leurs combinaisons,
(3) 1,0 % à 6,0 % par rapport au poids total du mélange, d'un tensioactif pris parmi les tensioactifs non-ioniques, les tensioactifs cationiques et leurs combinaisons, et
(4) une quantité catalytique d'un amorceur de polymérisation, et
(B) un constituant d'enveloppe polymère, apte à gonfler en milieu acide, disposé généralement autour dudit constituant de coeur, ledit constituant d'enveloppe comprenant le produit de réaction de polymérisation radicalaire d'un mélange comprenant :
(1) 10,0 % à 30,0 % par rapport au poids total du mélange, d'un constituant pris parmi les monomères éthyléniquement insaturés, portant un groupe amino, et leurs combinaisons,
(2) 15,0 % à 80,0 % par rapport au poids total du mélange, d'un constituant pris parmi les esters acryliques des alcools ayant 1 à 22 atomes de carbone, les esters méthacryliques des alcools ayant 1 à 22 atomes de carbone, le styrène, les styrènes substitués, l'acrylonitrile, le méthacrylonitrile, le chlorure de vinyle, le chlorure de vinylidène, les éthers vinyliques, les esters vinyliques, les N-vinylamides, l'acrylamide, les N-alkyl-acrylamides, le méthacrylamide, les N-alkylméthacrylamides, et leurs combinaisons,
(3) jusqu'à 10,0 % par rapport au poids total du mélange, d'un constituant pris parmi les monomères éthyléniquement insaturés, contenant au moins un groupe ammonium quaternaire, et leurs combinaisons,
(4) jusqu'à 5,0 % par rapport au poids total du mélange, d'un constituant pris parmi les monomères éthyléniquement insaturés, contenant au moins un groupe hydroxyle, et leurs combinaisons,
(5) jusqu'à 5,0 % par rapport au poids total du mélange, d'un constituant pris parmi le N-hydroxymcthyl-acrylamide, le N-hydroxyméthylméthacrylamide, les N-alcoxyméthyl-acrylamides, les N-alcoxyméthylméthacrylamides, et leurs combinaisons,
(6) jusqu'à 3,0 % par rapport au poids total du mélange, d'un agent de transfert de chaîne,
(7) 1,0 % à 6,0 % par rapport au poids total du mélange, d'un tensioactif pris parmi les tensioactifs non-ioniques, les tensioactifs cationiques, et leurs combinaisons, et
(8) une quantité catalytique d'un amorceur de polymérisation.

4. Particule coeur-enveloppe selon la revendication 3, dont ledit constituant d'enveloppe comprend le produit de réaction de polymérisation radicalaire d'un mélange qui comprend en outre 5,0 % à 20,0 % par rapport au poids total du mélange, d'un stabilisant choisi parmi les agents absorbant les rayons ultraviolets, contenant au moins un groupe éthyléniquement insaturé, les agents fixant les radicaux, contenant au moins un groupe éthyléniquement insaturé, les antioxydants contenant au moins un groupe éthyléniquement insaturé, les agents décomposant les peroxydes, contenant au moins un groupe éthyléniquement insaturé, et leurs combinaisons, ledit stabilisant étant lié de manière covalente audit constituant d'enveloppe.

5. Particule coeur-enveloppe selon l'une quelconque des revendications 1 à 4, pour laquelle ledit constituant de coeur constitue 60 % à 95 % du poids total de ladite particule.

6. Particule coeur-enveloppe selon la revendication 5, pour laquelle ledit constituant de coeur constitue 70 % à 90 % du poids total de ladite particule.

7. Particule coeur-enveloppe selon la revendication 5, pour laquelle ledit constituant d'enveloppe constitue 5 % à 40 % du poids total de ladite particule.

8. Particule coeur-enveloppe selon la revendication 6, pour laquelle ledit constituant d'enveloppe constitue 10 % à 30 % du poids total de ladite particule.

9. Particule coeur-enveloppe selon la revendication 2, pour laquelle l'agent absorbant les rayons ultraviolets est un produit choisi parmi les hydroxyphénylbenzotriazoles contenant au moins un groupe éthyléniquement insaturé, les benzophénones contenant au moins un groupe éthyléniquement insaturé, les porphines modifiées contenant au moins un groupe éthyléniquement insaturé, et leurs combinaisons.

10. Particule coeur-enveloppe selon la revendication 2, pour laquelle l'agent fixant les radicaux est un produit choisi parmi les dérivés de la tétraméthylpipéridine, contenant au moins un groupe éthyléniquement insaturé, et leurs combinaisons.

11. Particule coeur-enveloppe selon la revendication 2, pour laquelle l'antioxydant est un produit choisi parmi les phénols stériquement encombrés, contenant au moins un groupe ethyléniquement insaturé, les diarylamines contenant au moins un groupe éthyléniquement insaturé, et leurs combinaisons.

12. Particule coeur-enveloppe selon la revendication 2, pour laquelle l'agent décomposant les peroxydes est un produit choisi parmi les phosphites de triphényle modifiées, contenant au moins un groupe éthyléniquement insaturé, les mercaptans modifiés, contenant au moins un groupe éthyléniquement insaturé, et leurs combinaisons.

13. Particule coeur-enveloppe selon l'une quelconque des revendications précédentes, pour laquelle le monomère éthyléniquement insaturé, contenant au moins un groupe ammonium quaternaire, est un sel choisi parmi les sels de vinylbenzyltriméthylammonium, les sels d'acryloyloxyéthyltriméthylammonium, les sels d'acryloyloxyéthyldiéthylméthylammonium, les sels de méthacryloyloxyéthyltriméthylammonium, les sels de méthacryloyloxyéthylbenzyldiméthylammonium, les sels d'acryloyloxyéthylbenzyldiméthylammonium, les sels de 2-hydroxy-3-méthacryloyloxypropyltrimethylammonium, les sels de 2-hydroxy-3-acryloyloxypropyltriméthylammonium, les sels de methacrylamidopropyltriméthylammonium, et leurs combinaisons, ledit sel contenant au moins un anion opposé choisi parmi les anions halogénure, sulfate, alkylsulfate, arylsulfate et leurs combinaisons.

14. Particule coeur-enveloppe selon la revendication 13, pour laquelle l'anion opposé est un anion choisi parmi les anions chlorure, bromure, méthosulfate, sulfate, et leurs combinaisons.

15. Particule coeur-enveloppe selon l'une quelconque des revendications précédentes, pour laquelle l'amorceur de polymérisation représente 0,1 % à 3,0 % du poids total du mélange employé pour produire ledit constituant d'enveloppe, et est un produit choisi parmi le amorceurs thermiques, les amorceurs redox, et leurs combinaisons.

16. Particule coeur-enveloppe selon l'une quelconque des revendications précédentes, pour laquelle le monomère éthyléniquement insaturé, portant un groupe amino, est un produit choisi parmi l'acrylate de diméthylaminoéthyle, le méthacrylate de diméthylaminoéthyle, le méthacrylate de diéthylaminoéthyle, le méthacrylate de t-butylaminoéthyle, le diméthylaminopropyl-méthacrylamide, l'allylamine, la 2-vinylpyridine, la 4-vinylpyridine, et leurs combinaisons.

17. Particule coeur-enveloppe selon l'une quelconque des revendications précédentes, pour laquelle le monomère éthyléniquement insaturé, contenant au moins un groupe hydroxyle, est un produit choisi parmi l'acrylate d'hydroxyéthyle, l'acrylate d'hydroxypropyle, l'acrylate d'hydroxybutyle, le méthacrylate d'hydroxyéthyle, le méthacrylate d'hydroxypropyle, l'éther monovinylique de butanediol, l'alcool allylique, et leurs combinaisons.

18. Particule coeur-enveloppe selon l'une quelconque des revendications précédentes, pour laquelle l'agent de transfert de chaîne est un produit choisi parmi le dodécylmercaptan, le 2-mercaptoéthanol, les mercaptopropionates d'alkyle, l'acide mercaptoacétique, l'acide mercaptopropionique, l'octylmereaptan, et leurs combinaisons.

19. Particule coeur-enveloppe selon l'une quelconque des revendications précédentes, pour laquelle le tensioactif non-ionique est un produit choisi parmi les alkylphénols éthoxylés, les alcools gras éthoxylés, les copolymères séquences d'oxyde d'éthylène et d'oxyde de propylène, et leurs combianisons.

20. Particule coeur-enveloppe selon l'une quelconque des revendications précédentes, pour laquelle le tensioactif cationique est un produit choisi parmi les sels d'alkyltriméthylammonium dont le groupe alkyle contient 8 à 22 atomes de carbone et l'ion opposé est un anion chlorure, bromure, méthylsulfate ou éthylsulfatc, les sels d'alkylbenzyldiméthylammonium dont le groupe alkyle contient 8 à 22 atomes de carbone et l'ion opposé est un anion chlorure, bromure, méthylsulfate ou éthylsulfate, les sels d'alkylpyridinium dont le groupe alkyle contient 8 à 22 atomes de carbone et l'ion opposé est un anion chlorure, bromure, méthylsulfate ou éthylsulfate, et leurs combinaisons.

21. Particule coeur-enveloppe selon l'une quelconque des revendications précédentes, qui comprend plusieurs constituants d'enveloppe, chacun étant disposé autour dudit constituant de coeur.

22. latex comprenant une suspension aqueuse de particules coeur-enveloppe selon l'une quelconque des revendications précédentes.

23. Latex selon la revendication 22, qui a une teneur en matières solides constituées de particules coeur-enveloppe, qui est comprise dans l'intervalle allant de 25,0 % à 50,0 %.

24. Latex selon la revendication 23, qui a une teneur en matières solides constituées de particules coeur-enveloppe, qui est comprise dans l'intervalle allant de 35,0 % à 45,0 %.

25. Revêtement récepteur de jet d'encre, qui comprend le latex selon l'une quelconque des revendications 22 à 24.

26. Revêtement récepteur de jet d'encre selon la revendication 25, qui comprend en outre un pigment.

27. Revêtement récepteur de jet d'encre selon la revendication 26, dont le pigment est un produit choisi parmi la silice, l'alumine, les pigments plastiques, le carbonate de calcium, l'argile kaolin, et leurs combinaisons.

28. Produit imprimable par jet d'encre, qui comprend un support revêtu sur au moins un côté du revêtement selon l'une quelconque des revendications 25 à 27.

29. Produit imprimable par jet d'encre selon la revendication 28, dont le support est du papier, du carton, du bois, un film de matière plastique, une feuille métallique, une matière textile, ou une combinaison de ces produits.

30. Latex comprenant une suspension aqueuse de particules coeur-enveloppe selon l'une quelconque des revendications 1 à 21, dont le pH est réglé à une valeur comprise dans l'intervalle allant d'environ 3,5 à environ 7,0 par addition d'un acide choisi parmi les acides minéraux, les acides carboxyliques solubles dans l'eau, les acides sulfoniques solubles dans l'eau, et leurs combinaisons.

31. Latex selon la revendication 30, pour lequel l'acide est l'acide acétique, l'acide propionique, l'acide glycolique, l'acide lactique, ou une combinaison de ces acides.

32. Latex selon la revendication 30, qui a une teneur en matières solides constituées de particules coeur-enveloppe, qui est comprise dans l'intervalle allant de 25,0 % à 50,0 %.

33. Latex selon la revendication 30, qui a une teneur en matières solides constituées de particules coeur-enveloppe, qui est comprise dans l'intervalle allant de 35,0 % à 45,0 %.

34. Revêtement récepteur de jet d'encre, qui comprend le latex selon l'une quelconque des revendications 30 à 33.

35. Revêtement récepteur de jet d'encre selon la revendication 34, qui comprend en outre un pigment.

36. Revêtement récepteur de jet d'encre selon la revendication 35, dont le pigment est un produit choisi parmi la silice, l'alumine, les pigments plastique, le carbonate de calcium, l'argile kaolin, et leurs combinaisons.

37. Produit imprimable par jet d'encre, qui comprend un support revêtu sur au moins un côté du revêtement selon la revendication 34.

38. Produit imprimable par jet d'encre selon la revendication 37, dont le support est du papier, du carton, du bois, un film de matière plastique, une feuille métallique, une matière textile, ou une combinaison de ces produits.

## Patentansprüche

1. Kationisches Core-Shell-Partikel, das für eine Verwendung bei einer Formulierung von Tintenstrahl-aufnahmefähigen Beschichtungen geeignet ist, umfassend:
(A) eine polymerische Core-Komponente, wobei die Core-Komponente das Radikalpolymerisationsreaktionsprodukt eines Gemisches umfasst, das umfasst:
(1) 80,0% bis 99,5% des Gesamtgewichts des Monomergemisches eines Mitglieds, das ausgewählt ist aus der Gruppe, bestehend aus Acrylestern von Alkoholen mit 1 bis 22 Kohlenstoffatomen, Methacrylestern von Alkoholen mit 1 bis 22 Kohlenstoffatomen, Styrol, substituierten Styrolen, Acrylnitril, Methacrylnitril, Vinylchlorid, Vinylidenchlorid, Vinylethern, Vinylestern, N-Vinylamiden, Acrylamiden, Methacrylamiden und Kombinationen davon,
(2) 0,5% bis 20,0% des Gesamtgewichts des Monomergemisches eines Mitglieds, das ausgewählt ist aus der Gruppe, bestehend aus ethylenisch ungesättigten Monomeren mit mindestens einer quaternären Ammoniumgruppe und Kombinationen davon,
(3) 0,5% bis 8,0% des Gesamtgewichts des Gemisches eines Tensids, das ausgewählt ist aus der Gruppe, bestehend aus nicht ionischen Tensiden, kationischen Tensiden und Kombinationen davon, und
(4) eine katalytische Menge an Polymerisationsstarter, und
(B) eine Säure-quellbare polymerische Shell-Komponente, die allgemein über der Core-Komponente angeordnet ist, wobei die Shell-Komponente das Radikalpolymerisationsreaktionsprodukt eines Gemisches umfasst, das umfasst:
(1) 5,0% bis 35,0% des Gesamtgewichts des Gemisches eines Mitglieds, das ausgewählt ist aus der Gruppe, bestehend aus Amin-haltigen ethylenisch ungesättigten Monomeren und Kombinationen davon,
(2) 10,0% bis 80,0% des Gesamtgewichts des Gemisches eines Mitglieds, das ausgewählt ist aus der Gruppe, bestehend aus Acrylestern von Alkoholen mit 1 bis 22 Kohlenstoffatomen, Methacrylestern von Alkoholen mit 1 bis 22 Kohlenstoffatomen, Styrol, substituierten Styrolen, Acrylnitril, Methacrylnitril, Vinylchlorid, Vinylidenchlorid, Vinylethern, Vinylestern, N-Vinylamiden, Acrylamid, N-Alkyl-substituierten Acrylamiden, Methacrylamid, N-Alkyl-substituierten Methacrylamiden und Kombinationen davon,
(3) bis zu 15,0% des Gesamtgewichts des Gemisches eines Mitglieds, das ausgewählt ist aus der Gruppe, bestehend aus ethylenisch ungesättigten Monomeren mit mindestens einer quaternären Ammoniumgruppe und Kombinationen davon,
(4) bis zu 8,0% des Gesamtgewichts des Gemisches eines Mitglieds, das ausgewählt ist aus der Gruppe, bestehend aus ethylenisch ungesättigten Monomeren mit mindestens einer Hydroxylgruppe und Kombinationen davon,
(5) bis zu 8,0% des Gesamtgewichts des Gemisches eines Mitglieds, das ausgewählt ist aus der Gruppe, bestehend aus N-Hydroxymethylacrylamid, N-Hydroxymethylmethacrylamid, N-Alkoxymethylacrylamid, N-Alkoxymethylmethacrylamid und Kombinationen davon,
(6) bis zu 4,0% des Gesamtgewichts des Gemisches eines Kettenübertragungsreagenzes,
(7) 0,5% bis 8,0% des Gesamtgewichts des Gemisches eines Tensids, das ausgewählt ist aus der Gruppe, bestehend aus nicht ionischen Tensiden, kationischen Tensiden und Kombinationen davon, und
(8) eine katalytische Menge eines Polymerisationsstarters.

2. Core-Shell-Partikel nach Anspruch 1, wobei die Shell-Komponente das Radikalpolymerisationsreaktionsprodukt eines Gemisches umfasst, das ferner 0,5% bis 30,0% des Gesamtgewichtes des Gemisches eines Stabilisators umfasst, der ausgewählt ist aus der Gruppe, bestehend aus Ultraviolett-Absorptionsmitteln, die mindestens eine ethylenisch ungesättigte Gruppe enthalten, Radikalfängern, die mindestens eine ethylenisch ungesättigte Gruppe enthalten, Antioxidanzien, die mindestens eine ethylenisch ungesättigte Gruppe enthalten, Peroxid-Zersetzungsmitteln, die mindestens eine ethylenisch ungesättigte Gruppe enthalten, und Kombinationen davon, und wobei der Stabilisator kovalent an die Shell-Komponente gebunden ist.

3. Core-Shell-Partikel nach Anspruch 1, das umfasst:
(A) eine polymerische Core-Komponente, wobei die Core-Komponente das Radikalpolymerisationsreaktionsprodukt eines Gemisches umfasst, das umfasst:
(1) 85% bis 98,0% des Gesamtgewichts des Monomergemisches eines Mitglieds, das ausgewählt ist aus der Gruppe, bestehend aus Acrylestern von Alkoholen mit 1 bis 22 Kohlenstoffatomen, Methacrylestern von Alkoholen mit 1 bis 22 Kohlenstoffatomen, Styrol, substituierten Styrolen, Acrylnitril, Methacrylnitril, Vinylchlorid, Vinylidenchlorid, Vinylethern, Vinylestern, N-Vinylamiden, Acrylamiden, Methacrylamiden und Kombinationen davon,
(2) 2,0% bis 15,0% des Gesamtgewichts des Monomergemisches eines Mitglieds, das ausgewählt ist aus der Gruppe, bestehend aus ethylenisch ungesättigten Monomeren mit mindestens einer quaternären Ammoniumgruppe und Kombinationen davon,
(3) 1,0% bis 6,0% des Gesamtgewichts des Gemisches eines Tensids, das ausgewählt ist aus der Gruppe, bestehend aus nicht ionischen Tensiden, kationischen Tensiden und Kombinationen davon, und
(4) eine katalytische Menge an Polymerisationsstarter, und
(B) eine Säure-quellbare polymerische Shell-Komponente, die allgemein über der Core-Komponente angeordnet ist, wobei die Shell-Komponente das Radikalpolymerisationsreaktionsprodukt eines Gemisches umfasst, das umfasst:
(1) 10,0% bis 30,0% des Gesamtgewichts des Gemisches eines Mitglieds, das ausgewählt ist aus der Gruppe, bestehend aus Amin-haltigen ethylenisch ungesättigten Monomeren und Kombinationen davon,
(2) 15,0% bis 80,0% des Gesamtgewichts des Gemisches eines Mitglieds, das ausgewählt ist aus der Gruppe, bestehend aus Acrylestern von Alkoholen mit 1 bis 22 Kohlenstoffatomen, Methacrylestern von Alkoholen mit 1 bis 22 Kohlenstoffatomen, Styrol, substituierten Styrolen, Acrylnitril, Methacrylnitril, Vinylchlorid, Vinylidenchlorid, Vinylethern, Vinylestern, N-Vinylamiden, Acrylamid, N-Alkyl-substituierten Acrylamiden, Methacrylamid, N-Alkyl-substituierten Methacrylamiden und Kombinationen davon,
(3) bis zu 10,0% des Gesamtgewichts des Gemisches eines Mitglieds, das ausgewählt ist aus der Gruppe, bestehend aus ethylenisch ungesättigten Monomeren mit mindestens einer quaternären Ammoniumgruppe und Kombinationen davon,
(4) bis zu 5,0% des Gesamtgewichts des Gemisches eines Mitglieds, das ausgewählt ist aus der Gruppe, bestehend aus ethylenisch ungesättigten Monomeren mit mindestens einer Hydroxylgruppe und Kombinationen davon,
(5) bis zu 5,0% des Gesamtgewichts des Gemisches eines Mitglieds, das ausgewählt ist aus der Gruppe, bestehend aus N-Hydroxymethylacrylamid, N-Hydrox-ymethylmethacrylamid, N-Alkoxymethylacrylamid, N-Alkoxymethylmethacrylamid und Kombinationen davon,
(6) bis zu 3,0% des Gesamtgewichts des Gemisches eines Kettenübertragungsreagenzes,
(7) 1,0% bis 6,0% des Gesamtgewichts des Gemisches eines Tensids, das ausgewählt ist aus der Gruppe, bestehend aus nicht ionischen Tensiden, kationischen Tensiden und Kombinationen davon, und
(8) eine katalytische Menge eines Polymerisationsstarters.

4. Gore-Shell-Partikel nach Anspruch 3, wobei die Shell-Komponente das Radikalpolymerisationsreaktionsprodukt eines Gemisches umfasst, das ferner 5,0% bis 20,0% des Gesamtgewichtes des Gemisches eines Stabilisators umfasst, der ausgewählt ist aus der Gruppe, bestehend aus Ultraviolett-Absorptionsmitteln, die mindestens eine ethylenisch ungesättigte Gruppe enthalten, Radikalfängern, die mindestens eine ethylenisch ungesättigte Gruppe enthalten, Antioxidanzien, die mindestens eine ethylenisch ungesättigte Gruppe enthalten, Peroxid-Zersetzungsmitteln, die mindestens eine ethylenisch ungesättigte Gruppe enthalten, und Kombinationen davon, und wobei der Stabilisator kovalent an die Shell-Komponente gebunden ist.

5. Core-Shell-Partikel nach einem der Ansprüche 1 bis 4, wobei die Core-Komponente 60% bis 95% des Gesamtgewichts des Partikels ausmacht.

6. Core-Shell-Partikel nach Anspruch 5, wobei die Core-Komponente 70% bis 90% des Gesamtgewichts des Partikels ausmacht.

7. Core-Shell-Partikel nach Anspruch 5, wobei die Shell-Komponente 5% bis 40% des Gesamtgewichts des Partikels ausmacht.

8. Core-Shell-Partikel nach Anspruch 6, wobei die Shell-Komponente 10% bis 30% des Gesamtgewichts des Partikels ausmacht.

9. Core-Shell-Partikel nach Anspruch 2, wobei das Ultraviolett-Absorptionsmittel ein Mitglied ist, das ausgewählt ist aus der Gruppe, bestehend aus Hydroxyphenylbenzotriazolen mit mindestens einer ethylenisch ungesättigten Gruppe, Benzophenonen mit mindestens einer ethylenisch ungesättigten Gruppe, modifizierten Porphinen, die mindestens eine ethylenisch ungesättigte Gruppe enthalten, und Kombinationen davon.

10. Core-Shell-Partikel nach Anspruch 2, wobei der Radikalfänger ein Mitglied ist, das ausgewählt ist aus der Gruppe, bestehend aus Tetramethylpiperadin-Derivaten mit mindestens einer ethylenisch ungesättigten Gruppe und Kombinationen davon.

11. Core-Shell-Partikel nach Anspruch 2, wobei das Antioxidans ein Mitglied ist, das ausgewählt ist aus der Gruppe, bestehend aus sterisch gehinderten Phenolen mit mindestens einer ethylenisch ungesättigten Gruppe, Diarylaminen mit mindestens einer ethylenisch ungesättigten Gruppe und Kombinationen davon.

12. Core-Shell-Partikel nach Anspruch 2, wobei das Peroxid-Zersetzungsmittel ein Mitglied ist, das ausgewählt ist aus der Gruppe, bestehend aus modifizierten Triphenylphosphiten, die mindestens eine ethylenisch ungesättigte Gruppe enthalten, modifizierten Mercaptanen, die mindestens eine ethylenisch ungesättigte Gruppe enthalten, und Kombinationen davon.

13. Core-Shell-Partikel nach einem der vorhergehenden Ansprüche, wobei das ethylenisch ungesättigte Monomer mit mindestens einer quaternären Ammoniumgruppe ein Salz ist, das ausgewählt ist aus der Gruppe, bestehend aus Vinylbenzyltrimethylammoniumsalzen, Acryloyloxyethyltrimethylammoniumsalzen, Acryloyloxyethyldiethylmethylammoniumsalzen, Methacryloyloxyethyltrimethylammoniumsalzen, Methacryloyloxyethylbenzyldimethylammoniumsalzen, Acryloyloxyethylbenzyldimethylammoniumsalzen, 2-Hydroxy-3-methacryloyloxypropyltrimethylammoniumsalzen, 2-Hydroxy-3-acryloyloxypropyltrimethylammoniumsalzen, Methacrylamidapropyltrimethylammoniumsalzen und Kombinationen davon, und wobei das Salz mindestens ein Gegenanion enthält, das ausgewählt ist aus der Gruppe, bestehend aus Halogeniden, Sulfaten, Alkylsulfaten, Arylsulfaten und Kombinationen davon.

14. Core-Shell-Partikel nach Anspruch 13, wobei das Gegenanion ein Mitglied ist, das ausgewählt ist aus der Gruppe, bestehend aus Chlorid, Bromid, Methosulfat, Sulfat und Kombinationen davon.

15. Core-Shell-Partikel nach einem der vorhergehenden Ansprüche, wobei der Polymerisationsstarter 0,1% bis 3,0% des Gesamtgewichts des Gemisches, das verwendet wird, um die Shell-Komponente herzustellen, umfasst und ein Mitglied ist, das ausgewählt ist aus der Gruppe, bestehend aus thermischen Startern, Redoxstartern und Kombinationen davon.

16. Core-Shell-Partikel nach einem der vorhergehenden Ansprüche, wobei das Amin-haltige ethylenisch ungesättigte Monomer ein Mitglied ist, das ausgewählt ist aus der Gruppe, bestehend aus Dimethylaminoethylacrylat, Dimethylaminoethylmethacrylat, Diethylaminoethylmethaerylat, t-Butylaminoethylmethacrylat, Dimethylaminopropylmethacrylamid, Allylamin, 2-Vinylpyridin, 4-Vinylpyridin und Kombinationen davon.

17. Core-Shell-Partikel nach einem der vorhergehenden Ansprüche, wobei das ethylenisch ungesättigte Monomer mit mindestens einer Hydroxylgruppe ein Mitglied ist, das ausgewählt ist aus der Gruppe bestehend aus Hydroxyethylacrylat, Hydroxypropylacrylat, Hydroxybutylacrylat, Hydroxyethylmethacrylat, Hydroxypropylmethacrylat, Butandiolmonovinylether, Allylalkohol und Kombinationen davon.

18. Core-Shell-Partikel nach einem der vorhergehenden Ansprüche, wobei das Kettenübertragungsreagenz ein Mitglied ist, das ausgewählt ist aus der Gruppe, bestehend aus Dodecylmercaptan, 2-Mercaptoethanol, Alkylmercaptopropionaten, Mercaptoessigsäure, Mercaptopropionsäure, Octylmercaptan und Kombinationen davon.

19. Core-Shell-Partikel nach einem der vorhergehenden Ansprüche, wobei das nicht ionische Tensid ein Mitglied ist, das ausgewählt ist aus der Gruppe, bestehend aus ethoxylierten Alkylphenolen, ethoxylierten Fettalkoholen, Ethylenoxid/Propylenoxid-Block-Copolymeren und Kombinationen davon.

20. Core-Shell-Partikel nach einem der vorhergehenden Ansprüche, wobei das kationische Tensid ein Mitglied ist, das ausgewählt ist aus der Gruppe, bestehend aus Alkyltrimethylammoniumsalzen, worin die Alkylgruppe 8 bis 22 Kohlenstoffatome enthält und das Gegenion des Salzes ein Mitglied ist, das ausgewählt ist aus der Gruppe, bestehend aus Chlorid, Bromid, Methylsulfat und Ethylsulfat, Alkylbenzyldimethylammoniumsalzen, worin die Alkylgruppe 8 bis 22 Kohlenstoffatome enthält und das Gegenion des Salzes ein Mitglied ist, das ausgewählt ist aus der Gruppe, bestehend aus Chlorid, Bromid, Methylsulfat und Ethylsulfat, Alkylpyridiniumsalzen, worin die Alkylgruppe 8 bis 22 Kohlenstoffatome enthält und das Gegenion des Salzes ein Mitglied ist, das ausgewählt ist aus der Gruppe, bestehend aus Chlorid, Bromid. Methylsulfat und Ethylsulfat, und Kombinationen davon.

21. Core-Shell-Partikel nach einem der vorhergehenden Ansprüche, wobei das Core-Shell-Partikel ferner eine Vielzahl von Shell-Komponenten umfasst, die jeweils über der Core-Komponente angeordnet sind.

22. Latex, der eine wässrige Suspension von Core-Shell-Partikeln nach einem der vorhergehenden Ansprüche umfasst.

23. Latex nach Anspruch 22, wobei der Latex einen Feststoffgehalt von Core-Shell-Partikeln von 25,0% bis 50,0% aufweist.

24. Latex nach Anspruch 23, wobei der Latex einen Feststoffgehalt von Core-Shell-Partikeln von 35,0% bis 45,0% aufweist.

25. Tintenstrahl-aufnahmefähige Beschichtung, die den Latex nach einem der Ansprüche 22 bis 24 umfasst.

26. Tintenstrahl-aufnahmefähige Beschichtung nach Anspruch 25, wobei die Beschichtung ferner ein Pigment umfasst.

27. Tintenstrahl-aufnahmefähige Beschichtung nach Anspruch 26, wobei das Pigment ein Mitglied ist, das ausgewählt ist aus der Gruppe, bestehend aus Silica, Aluminiumoxid, Kunststoffpigmenten, Calciumcarbonat, Kaolinton und Kombinationen davon.

28. Tintenstrahl-bedruckbares Produkt, das ein Substrat umfasst, das mindestens auf einer Seite mit der Beschichtung nach einem der Ansprüche 25 bis 27 beschichtet ist.

29. Tintenstrahl-bedruckbares Produkt nach Anspruch 28, wobei das Substrat ein Mitglied ist, das ausgewählt ist aus der Gruppe, bestehend aus Papier, Pappe, Holz, Plastikfolie, Metallfolie, Textilien und Kombinationen davon.

30. Latex, der eine wässrige Suspension von Core-Shell-Partikeln nach einem der Ansprüche 1 bis 21 umfasst, wobei der pH-Wert des Latex auf etwa 3,5 bis etwa 7,0 durch Zugabe einer Säure eingestellt ist, die ausgewählt ist aus der Gruppe, bestehend aus Mineralsäuren, wasserlöslichen Carbonsäuren, wasserlöslichen Sulfonsäuren und Kombinationen davon.

31. Latex nach Anspruch 30, wobei die Säure ein Mitglied ist, das ausgewählt ist aus der Gruppe, bestehend aus Essigsäure, Propionsäure, Glykolsäure, Milchsäure und Kombinationen davon.

32. Latex nach Anspruch 30, wobei der Latex einen Feststoffgehalt von Core-Shell-Partikeln von 25,0% bis 50,0% aufweist.

33. Latex nach Anspruch 30, wobei der Latex einen Feststoffgehalt von Core-Shell-Partikeln von 35,0% bis 45,0% aufweist.

34. Tintenstrahl-aufnahmefähige Beschichtung, die den Latex nach einem der Ansprüche 30 bis 33 umfasst.

35. Tintenstrahl-aufnahmefähige Beschichtung nach Anspruch 34, wobei die Beschichtung ferner ein Pigment umfasst.

36. Tintenstrahl-aufnahmefähige Beschichtung nach Anspruch 34, wobei das Pigment ein Mitglied ist, das ausgewählt ist aus der Gruppe, bestehend aus Silica, Alununiumoxid, Kunststoffpigmenten, Calciumcarbonat, Kaolinton und Kombinationen davon.

37. Tintenstrahl-bedruckbares Produkt, das ein Substrat umfasst, das mindestens auf einer Seite mit der Beschichtung nach Anspruch 34 beschichtet ist.

38. Tintenstrahl-bedruckbares Produkt nach Anspruch 37, wobei das Substrat ein Mitglied ist, das ausgewählt ist aus der Gruppe, bestehend aus Papier, Pappe, Holz, Plaztikfolie, Metallfolie, Textilien und Kombinationen davon.
